# EUROPÄISCHE PATENTSCHRIFT

(11) **EP 2 361 492 B1**
(45) Veröffentlichungstag und Bekanntmachung des Hinweises auf die Patenterteilung: **09.01.2013**
(21) Anmeldenummer: 11401019.2
(22) Anmeldetag: 15.02.2011
(51) Int. Cl.: A01C 7/04

(54) **Pneumatische Einzelkornsämaschine**
Pneumatic single grain seeder
Semoir monograine pneumatique

(30) Priorität: 23.02.2010 DE 102010000514
(43) Veröffentlichungstag der Anmeldung: 31.08.2011
(73) Patentinhaber: Amazonen-Werke H. Dreyer GmbH & Co. KG, 49205 Hasbergen (DE)
(72) Erfinder: Brüggemann, Klaus, 27777, Ganderkesee (DE); Mertens, Daniel, 26123, Oldenburg (DE)

(56) Entgegenhaltungen:
- EP-A1- 0 216 057
- EP-A1- 2 067 396
- DE-A1-102006 036 740

## Beschreibung

Die Erfindung betrifft eine pneumatische Einzelkornsämaschine gemäß des Oberbegriffes des Patentanspruches 1.

Eine derartige Einzelkornsämaschine ist beispielsweise durch die DE 10 2006 036 740 A1 bekannt. Die Vereinzelungstrommel der Einzelkornsämaschine weist Perforationen auf, die mit einer Druckdifferenz beaufschlagt werden. Wenn die angetriebene Vereinzelungstrommel in ihrem unteren Bereich durch einen Saatgutvorrat geführt wird, lagern sich an den mit einer Druckdifferenz beaufschlagten Perforationen der Vereinzelungstrommel Saatkörner an. In dem auf die Drehrichtung der Trommel bezogenen aufsteigenden Rotationsbereich der Vereinzelungstrommel sind Abstreiferelemente im Bereich der Perforationsreihen angeordnet, um eine Vereinzelung der an den Perforationen anhaftenden Saatkörner zu gewährleisten, damit Doppelbelegungen durch Saatkörner an einer Perforation vermieden werden. Weiterhin weist die Einzelkornsämaschine Ausbringleitungen auf, über welche die von der Vereinzelungstrommel vereinzelten Saatkörner Ausbringeinrichtungen, wie Säscharen, zugeführt werden. Bei der bekannten Einzelkornsämaschine sind die Einmündungsöffnungen der Ausbringleitungen und die zugeordneten Abdeckeinrichtungen, mittels deren die Druckdifferenz an den Perforationen zur Ablösung der Saatkörner unterbrochen werden kann, im auf die Drehrichtung der Trommel bezogenen abfallenden Rotationsbereich der Vereinzelungstrommel angeordnet.

Durch diese entfernte Anordnung der Einmündungsöffnungen der Ausbringleitungen und der zugeordneten Abdeckeinrichtungen zur Druckdifferenzunterbrechung ergibt sich ein großer ungenutzter Raum oberhalb des Saatgutvorrates in dem Vereinzelungsgehäuse.

Derartige Einzelkornsämaschinen sind mit Abschalteinrichtungen und Saatgutrückführungseinrichtung ausgestattet, um entweder die Arbeitsbreite der Einzelkornsämaschinen zu reduzieren oder einzelne Ausbringleitungen gezielt abzuschalten, damit den diesen zugeordneten Ausbringelementen kein Saatgut zugeführt wird, um beispielsweise Fahrgassen anzulegen. Diese Einrichtungen sind so ausgebildet, dass das Saatgut über separate Rückführleitungen wieder in den Saatgutvorrat des Vorratsbehälters zurückgeführt werden. Diese Ausgestaltung ist sehr aufwendig.

Der Erfindung liegt die Aufgabe zugrunde, die Anordnungsart des Ablösebereiches der vereinzelten Saatkörner zumindest der abzuschaltenden Perforationsreihen zu optimieren, so dass eine vereinfachte Rückführung der abgelösten Saatkörner in den Saatgutvorrat erreichbar ist bzw. erreicht wird. Weiterhin soll eine Anhaftung von abgestreiften Saatkörnern an dem Spalt zwischen der Gehäusewandung und Trommeloberfläche neben den Einmündungsöffnungen der Ausbringleitung vermieden werden.

Diese Aufgabe wird erfindungsgemäß dadurch gelöst, dass die Einmündungsöffnungen der Ausbringleitungen und die zugeordneten Abdeckeinrichtungen im auf die Drehrichtung bezogenen aufsteigenden Rotationsbereich des Vereinzelungsbereiches der Trommel angeordnet sind, dass die Einmündungsöffnungen der Ausbringleitungen und die zugeordneten Abdeckeinrichtungen im auf die Drehrichtung bezogenen aufsteigenden Rotationsbereich des Vereinzelungsbereiches der Trommel angeordnet sind, dass eine aufrecht stehende und bis zumindest annähernd an die Trommeloberfläche heranreichende Sperrwand im Bereich der Eingangsöffnungen der Ausbringleitungen angeordnet ist, dass beabstandet hinter der Absperrwand die Gehäusewandung, die bis zumindest annähernd bis an die Trommeloberfläche heranreicht, angeordnet ist, dass die Absperrwand derart angeordnet und/oder ausgebildet ist, dass zumindest eine Luftdurchtrittsöffnung oberhalb der Einmündungsöffnungen der Ausbringleitungen zu dem Raum zwischen der Absperrwand und der Gehäusewandung vorhanden ist.

Infolge dieser Maßnahmen wird der Ablösebereich der Saatkörner von den Perforationen und der Überführungsbereich der Saatkörner in den Einmündungsöffnungen der Ausbringleitungen in einen Bereich verlagert, in dem die den abgesperrten Ausbringleitungen an sich zuzuführenden Saatkörner bereits in einem Bereich von der Trommel abgelöst werden, bevor sie in die Einmündungsöffnungen der Ausbringleitungen gelangen in welchem sie allein aufgrund der Schwerkraft, ohne zusätzliche Rückführeinrichtungen in den Saatgutvorrat zurückfallen könne, ohne dass separat Rückführleitungen geschaffen werden.

Durch die Anordnung der Absperrwand vor der eigentlichen Gehäusewandung im Bereich der Eingangsöffnung wird nun erreicht, dass sich an dem Spalt zwischen der Unterkante der Sperrwand und der Trommeloberfläche aufgrund keines Druckunterschiedes auf beiden Seiten der Absperrwand keine Saatkörner, die abgestreift werden, sich neben den Eingangsöffnungen der Ausbringleitungen anlagern können. Dadurch das im Bereich hinter der Sperrwand, also zwischen Absperrwand und eigentlicher Gehäusewand der gleiche Druck wie im Vereinzelungsbereich herrscht, kann sich hier kein entsprechender Druckunterschied ausbilden, der dazu ausreicht, dass sich Saatkörner hier anlagern können.

Somit ist also gewährleistet, dass auf einfache Weise vermieden wird, dass sich abgestreifte Körner im Bereich der Wand, die im Bereich der Eingangsöffnungen der Ausbringleitungen angeordnet ist, ansammeln können.

Damit sich das gleiche Druckniveau in einfacher Weise im Raum oberhalb der Trommeloberfläche im Vereinzelungsbereich und in dem Bereich zwischen Absperrwand und Gehäusewandung ausbilden kann, ist vorgesehen, dass die Absperrwand mit ihrer oberen Kante zur Schaffung einer Luftdurchtrittsöffnung beabstandet zu den Wandungen des Gehäuses endet.

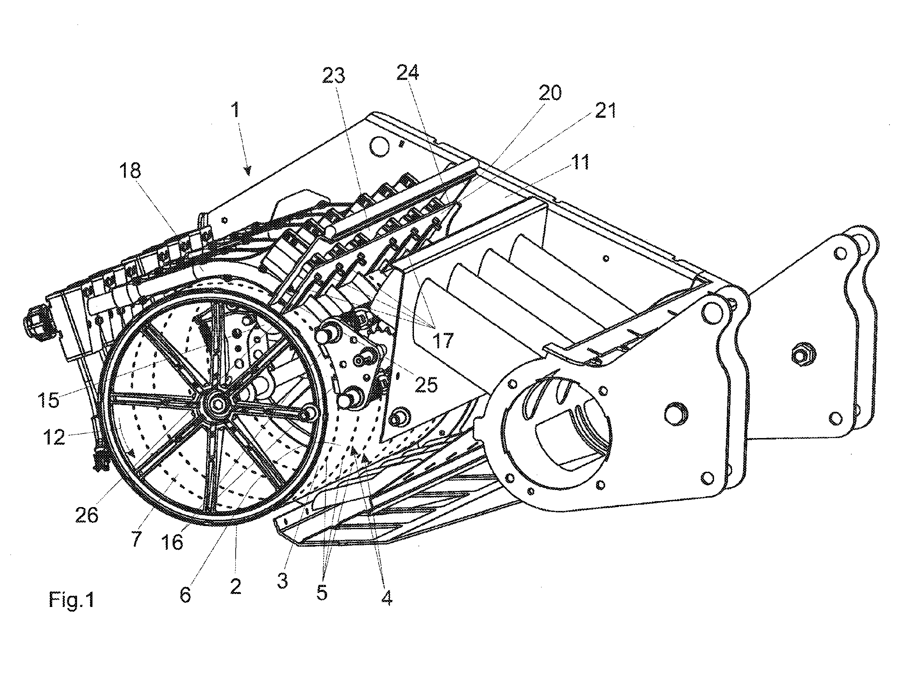

Weitere Einzelheiten der Erfindung sind der Beispielsbeschreibung und den Zeichnungen zu entnehmen.
Hierbei zeigen
- Fig. 1: das Vereinzelungsgehäuse mit der Vereinzelungstrommel und der Vereinzelungsvorrichtung, ohne seitliche Lagerungselemente der Vereinzelungstrommel und ohne Saatgutvorratsbehälter der Einzelkornsämaschine in perspektivischer Ansicht, wobei die vordere Seitenwand abgenommen ist,
- Fig. 2: das Vereinzelungsgehäuse mit der Vereinzelungstrommel gemäß Fig. 1 in Seitenansicht,

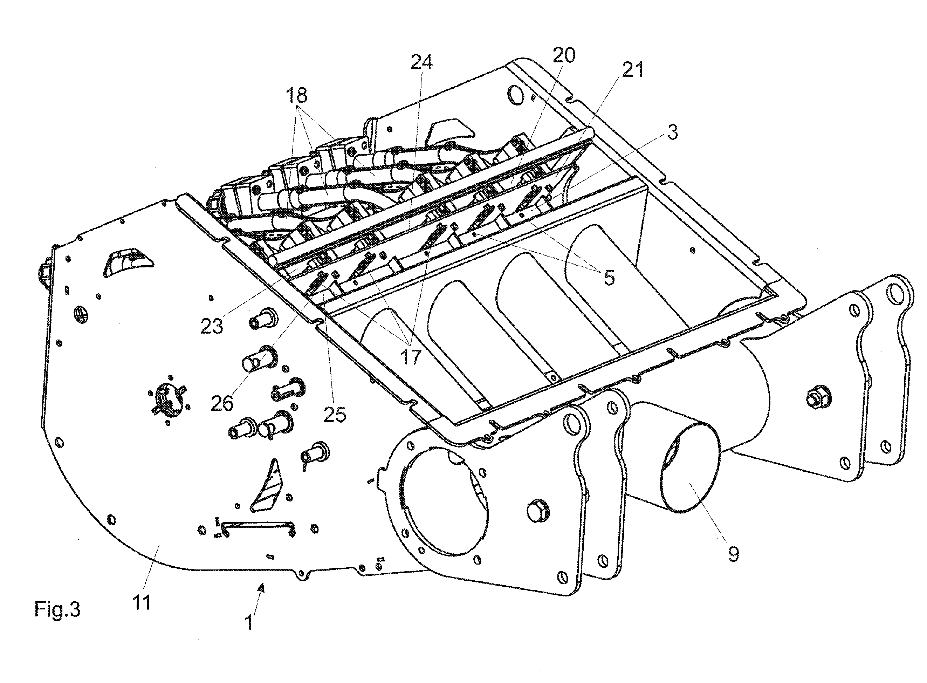

- Fig. 3: die Vereinzelungseinrichtung in der Darstellung nach Fig. 1 mit der vorderen Seitenwand.

Die Einzelkornsämaschine weist das Vereinzelungsgehäuse 1 mit der darin drehbar gelagerten und angetriebenen Vereinzelungstrommel 2, auf. Über eine nicht dargestellte Antriebsvorrichtung wird die Vereinzelungstrommel 2 in Rotation versetzt. Oberhalb der Vereinzelungstrommel 2 ist ein nicht dargestellter Vorratsbehälter angeordnet. In den Umfangsmantel 3 der Vereinzelungstrommel 2 sind kreisförmig in Perforationsreihen 4 angeordnete Perforationen 5 angebracht. Der Vorratsbehälter und das Vereinzelungsgehäuse 1 werden auf der Vereinzelungsseite 6 der Trommel 2 mit einem Überdruck beaufschlagt. Somit entsteht eine Druckdifferenz zwischen dem Innenraum 7 der Vereinzelungstrommel 2 und dem Außenbereich 6 der Vereinzelungstrommel 2 in deren Vereinzelungsbereich 8. Die Druckdifferenz wird durch ein nicht dargestelltes Gebläse erzeugt. Das Gebläse ist über den Anschlussstutzen 9 an das Vereinzelungsgehäuse mittels einer Luftleitung angeschlossen. Wenn die Vereinzelungstrommel 2 durch den Saatgutvorrat, der sich zumindest in dem unteren Bereich der Vereinzelungstrommel 2 in dem Vereinzelungsgehäuse 1 befindet, geführt wird, lagern sich an der Perforationen auf der Außenseite 6 der perforierten Trommel 2 Samenkörner an. Die Seitenwände 11 des Vereinzelungsgehäuses 1 erstrecken sich parallel zur Bewegungsrichtung 12 der Trommel 1 und wirken zumindest annähernd abdichtend mit der Trommel 1 zusammen.

Des Weiteren ist der Trommel 2 eine die an die Perforationen 5 angelegte Druckdifferenz zum Ablösen der Samenkörner von den Perforationen 5 unterbrechende Abdeckeinrichtung 13 im Innenraum 7 der Trommel 2 angeordnet. Diese Abdeckeinrichtung 13 weist auf einer am Vereinzelungsgehäuse 1 angeordneten Welle 14 drehbar gelagerte walzenartige Elemente 15 auf.

Im Vereinzelungsbereich 8 der Trommel 2 ist zwischen dem Saatgutvorratsbereich 10 und dem Bereich, dem die Abdeckeinrichtung 13 zugeordnet ist, eine Abstreifereinrichtung 16 angeordnet, um Doppelbelegungen an den Perforationen 5 zu vermeiden.

Weiterhin weist die Einzelkornsämaschine bis an die Trommeloberfläche der Trommel 2 heranreichende, mit Einmündungsöffnungen 17 versehene Ausbringleitungen 18 auf, welche zu Ausbringelementen, wie beispielsweise Säscharen, führen. Mittels dieser Ausbringleitungen 18 sind die von der Vereinzelungstrommel 2 vereinzelten Saatkörner den Ausbringelementen mittels eines Luftstromes über die Ausbringleitungen 18 zuführbar. Hierbei reicht jeweils das eine Ende der Ausbringleitungen 18 mit ihrer jeweiligen Einmündungsöffnung 17 bis an die Trommeloberfläche der Trommel 2 heran, um so eine sichere Übergabe des vereinzelten Saatkornes über die jeweilige Einmündungsöffnung 17 in die jeweilige Ausbringleitung 18 zu gewährleisten. An die Verbindungsstücke der Ausbringleitungen 18 sind Ausbringverlängerungsleitungen, die die Ausbringleitungen bis zu den Ausbringelementen verlängern, anzuschließen.

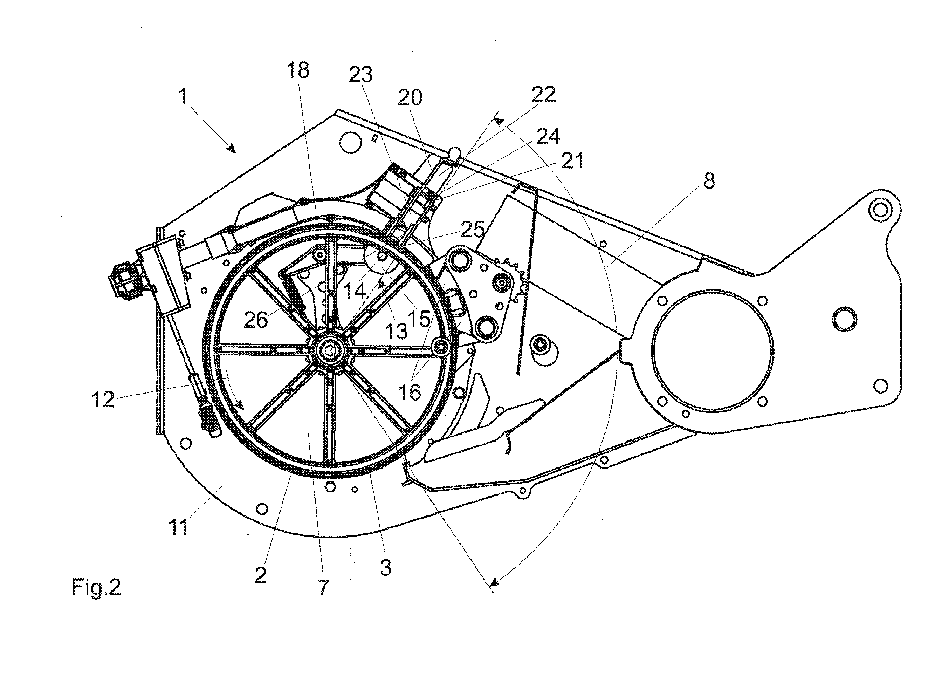

Die Einmündungsöffnungen 17 der Ausbringleitungen 18 und die zugeordneten Abdeckeinrichtungen 13 sind, insbesondere wie die Fig. 2 zeigt, im auf die Drehrichtung 12 der Trommel 2 bezogenen aufsteigenden Rotationsbereich des Vereinzelungsbereiches 8 der Trommel 2 angeordnet. Hierbei sind die Eingangsöffnungen 17 und die zugeordneten Abdeckmittel 15 der Abdeckeinrichtung 13 in einem Bereich angeordnet, der in einem Winkelbereich zwischen 0° und 60°, im Ausführungsbeispiel von etwa 45°, zu einer durch die Trommeldrehachse gezogenen Horizontalen liegt.

Die im Bereich der Ausbringleitungen 18 liegende Wand 20 des Vereinzelungsgehäuses 1 ist gegenüber den Eingangsöffnungen 17 der Ausbringleitungen 18 in Drehrichtung versetzt angeordnet. Vor der Gehäusewand 20 ist beabstandet die bis an die Trommeloberfläche 6 heranreichende Absperrwand 21 im Bereich der Eingangsöffnungen 17 der Ausbringleitungen 18 angeordnet. Somit befindet sich beabstandet hinter der Absperrwand 21 die Gehäusewandung 20, die bis zumindest annähernd bis an die Trommeloberfläche 6 heranreicht. Die Absperrwand 21 ist derart angeordnet und/oder ausgebildet ist, dass zumindest eine Luftdurchtrittsöffnung 22 oberhalb der Einmündungsöffnungen 17 der Ausbringleitungen 18 zu dem Raum 23 zwischen der Absperrwand 21 und der Gehäusewandung 20 vorhanden ist. Die Absperrwand 21 endet mit ihrer oberen Kante 24 zur Schaffung einer Luftdurchtrittsöffnung 22 beabstandet zu den Wandungen des Gehäuses 1 endet. Somit herrscht in dem Vereinzelungsraum, der von dem Vereinzelungsbereich 8 definiert wird, der gleiche Druck wie im Raum 23 zwischen der Absperrwand 21 und Gehäusewand 20. An dem Spalt 25 zwischen der Trommeloberfläche 6 und der unteren Kante 26 der Absperrwand 21 ist kein Druckunterschied auf beiden Seiten der Absperrwand, so dass sich keine abgestreiften Saatkörner hier anlagern können. Vielmehr fallen die abgestreiften Saatkörner, wenn die Einmündungsöffnungen 17 der Ausbringleitungen 18 oder die Ausbringleitungen selbst abgesperrt sind, wieder in den Saatgutvorrat zurück.

## Patentansprüche

1. Pneumatische Einzelkornsämaschine mit einem einen Saatgutvorratsbehälter aufweisenden Gehäuse und zumindest einer drehbar angetriebenen Vereinzelungstrommel, in deren Umfangsmantel kreisförmig in Perforationsreihen angeordnete Perforationen angebracht sind, einem Gebläse, mittels welchem eine Druckdifferenz zwischen dem Innenraum der Vereinzelungstrommel und dem Außenbereich der Vereinzelungstrommel erzeugbar ist, so dass, wenn die Vereinzelungstrommel durch den Saatgutvorrat geführt wird, sich an den Perforationen auf der Außenseite der perforierten Trommel Samenkörner anlagern, wobei das Gehäuse zwei voneinander beabstandete Seitenwände aufweist, die sich parallel zur Bewegungsrichtung der Trommel erstrecken und mit der Trommel zumindest annähernd abdichtend zusammenwirken, wobei eine die an die Perforationen angelegte Druckdifferenz zum Ablösen der Saatkörner von den Perforationen unterbrechende Abdeckeinrichtung im Innenraum der Trommel angeordnet ist, wobei im Bereich der Abdeckeinrichtung und den Perforationsreihen jeweils das eine Ende einer Ausbringleitung mit ihrer Einmündungsöffnung bis an die Trommeloberfläche zumindest annähernd heranreichend angeordnet ist, **dadurch gekennzeichnet, dass** die Einmündungsöffnungen (17) der Ausbringleitungen (18) und die zugeordneten Abdeckeinrichtungen (13) im auf die Drehrichtung (12) bezogenen aufsteigenden Rotationsbereich des Vereinzelungsbereiches (8) der Trommel ( 2) angeordnet sind, dass eine aufrecht stehende und bis zumindest annähernd an die Trommeloberfläche (6) heranreichende Sperrwand (21) im Bereich der Eingangsöffnungen (17) der Ausbringleitungen (18) angeordnet ist, dass beabstandet hinter der Absperrwand (21) die Gehäusewandung (20), die bis zumindest annähernd bis an die Trommeloberfläche (6) heranreicht, angeordnet ist, dass die Absperrwand (21) derart angeordnet und/oder ausgebildet ist, dass zumindest eine Luftdurchtrittsöffnung (22) oberhalb der Einmündungsöffnungen (17) der Ausbringleitungen (18) zu dem Raum (23) zwischen der Absperrwand (21) und der Gehäusewandung (20) vorhanden ist.

2. Einzelkornsämaschine nach Anspruch 1, **dadurch gekennzeichnet, dass** die Absperrwand mit ihrer oberen Kante zur Schaffung einer Luftdurchtrittsöffnung beabstandet zu den Wandungen des Gehäuses endet.

## Claims

1. Pneumatic single grain seed drill having a housing having a seed storage container, and at least one rotatably driven singling drum, in the circumferential lateral surface of which there are provided perforations arranged in rows of perforations in a circular manner, a fan, by means of which a pressure difference between the interior of the singling drum and the exterior region of the singling drum is creatable, such that, when the singling drum is guided through the seed store, grains are taken up at the perforations on the outer side of the perforated drum, wherein the housing has two spaced-apart side walls which extend parallel to the direction of movement of the drum and interact with the drum in an at least approximately sealing manner, wherein a covering device for interrupting the pressure difference applied at the perforations in order to detach the grains from the perforations is arranged in the interior of the drum, wherein, in the region of the covering device and the rows of perforations, in each case one end of a dispensing line is arranged with its mouth opening extending at least approximately as far as the drum surface, **characterized in that** the mouth openings (17) of the dispensing lines (18) and the associated covering devices (13) are arranged in the rotation region of the singling region (8) of the drum (2), said rotation region rising with respect to the direction of rotation (12), **in that** an upright barrier wall (21) that reaches at least approximately as far as the drum surface (6) is arranged in the region of the inlet openings (17) of the dispensing lines (18), **in that** the housing wall (20), which extends at least approximately as far as the drum surface (6), is arranged at a distance after the barrier wall (21), **in that** the barrier wall (21) is arranged and/or configured such that at least one air-passage opening (22) is present above the mouth openings (17) of the dispensing lines (18) to the space (23) between the barrier wall (21) and the housing wall (20).

2. Single grain seed drill according to Claim 1, **characterized in that** the barrier wall ends with its upper edge at a distance from the walls of the housing in order to create an air-passage opening.

## Revendications

1. Semoir monograine pneumatique, comportant un boîtier comprenant un réservoir de semences et au moins un tambour séparateur entraîné en rotation dans l'enveloppe périphérique duquel sont pratiquées des perforations disposées de manière circulaire en rangées de perforations, une soufflante au moyen de laquelle une différence de pression peut être produite entre l'espace intérieur du tambour séparateur et la région extérieure du tambour séparateur, de sorte que, lorsque le tambour séparateur est guidé à travers la réserve de semences, des graines de semences s'accumulent au niveau des perforations sur le côté extérieur du tambour perforé, le boîtier comprenant deux parois latérales espacées l'une de l'autre qui s'étendent parallèlement à la direction de déplacement du tambour et qui coopèrent avec le tambour de manière au moins approximativement étanche, un dispositif de recouvrement interrompant la différence de pression appliquée aux perforations pour décrocher les graines de semences des perforations étant disposé dans l'espace intérieur du tambour et, dans la région du dispositif de recouvrement et des rangées de perforations, l'une des extrémités d'une conduite de distribution étant respectivement disposée de manière à ce que son ouverture d'embouchure s'étende au moins approximativement jusqu'à la surface du tambour, **caractérisé en ce que** les ouvertures d'embouchure (17) des conduites de distribution (18) et les dispositifs de recouvrement (13) associés sont disposés dans la région de rotation, ascendante par rapport au sens de rotation (12), de la région de séparation (8) du tambour (2), **en ce qu'**une paroi de blocage (21) verticale et s'étendant au moins approximativement jusqu'à la surface du tambour (6) est disposée dans la région des ouvertures d'entrée (17) des conduites de distribution (18), **en ce que** la paroi de boîtier (20) qui s'étend au moins approximativement jusqu'à la surface du tambour (6) est disposée à distance derrière la paroi de blocage (21), et **en ce que** la paroi de blocage (21) est disposée et/ou réalisée de telle sorte qu'au moins une ouverture de passage d'air (22) est présente au-dessus des ouvertures d'embouchure (17) des conduites de distribution (18) vers l'espace (23) entre la paroi de blocage (21) et la paroi de boîtier (20).

2. Semoir monograine selon la revendication 1, **caractérisé en ce que**, pour obtenir une ouverture de passage d'air, la paroi de blocage se termine avec son bord supérieur situé à distance des parois du boîtier.
